# EUROPEAN PATENT SPECIFICATION

(11) **EP 4 015 973 B1**
(45) Date of publication and mention of the grant of the patent: **20.03.2024**
(21) Application number: 21214896.9
(22) Date of filing: 15.12.2021
(51) Int. Cl.: F28F 1/12, B64G 1/50, F28F 3/12, F28F 7/02

(54) **EXTRAPLANETARY HEAT EXCHANGER**
EXTRAPLANEÄRER WÄRMETAUSCHER
ÉCHANGEUR DE CHALEUR EXTRAPLANÉTAIRE

(30) Priority: 17.12.2020 US 202017125125
(43) Date of publication of application: 22.06.2022
(73) Proprietor: Hamilton Sundstrand Corporation, Charlotte, NC 28217-4578 (US)
(72) Inventor: STRICKLAND, Julie, Houston, TX 77062 (US); ANDERSON, Samuel, Houston, TX 77062 (US); ROHRIG, Jake, Simsbury, CT 06070 (US)
(74) Representative: Dehns

(56) References cited:
- US-A- 2 584 573
- US-A- 5 094 409
- US-A1- 2008 000 168

## Description

### BACKGROUND

Exemplary embodiments pertain to the art of extraplanetary habitats, and in particular to heat dissipation from an extraplanetary habitat and/or equipment.

In extraplanetary environments, such as locations on the moon, Mars, or the like, heat is generated by equipment such as electronics which must be dissipated, and/or it is desired to provide climate control to a habitat. Atmosphere (air) may be thin or non-existent, so traditional methods of heat transfer cannot be utilized. Thus, a thermal energy exchange apparatus must be provided. US 5 094 409 A discloses an extraplanetary habitat.

### BRIEF DESCRIPTION

In one embodiment, an extraplanetary habitat system as defined in claim 1 is provided.

Additionally or alternatively, in this or other embodiments an input pathway connects the one or more heat generating systems to the heat exchanger, to direct a flow of fluid from the habitat to the heat exchanger, an output pathway connects the habitat to the heat exchanger to direct the flow of fluid cooled by the heat exchanger to the habitat.

Additionally or alternatively, in this or other embodiments the flow of fluid is one of air, water or refrigerant.

Additionally or alternatively, in this or other embodiments a pump or a fan is operably connected to one or more of the input pathway or the output pathway to urge the flow of fluid therethrough.

Additionally or alternatively, in this or other embodiments the heat exchanger includes a heat exchanger pathway through which the flow of fluid is directed to exchange thermal energy with the regolith material.

Additionally or alternatively, in this or other embodiments the heat exchanger pathway is multi-pass.

Additionally or alternatively, in this or other embodiments a plurality of fins extend from the heat exchanger pathway.

Additionally or alternatively, in this or other embodiments the heat exchanger is located at a depth of between 1 and 3 feet below a top surface of the regolith material.

Additionally or alternatively, in this or other embodiments the one or more heat generating systems includes an environmental control and life support system or a thermal control system.

In another embodiment, a method of cooling one or more heat generating components of an extraplanetary habitat as defined in claim 8 is provided.

Additionally or alternatively, in this or other embodiments the fluid is flowed from the habitat to the heat exchanger along an input pathway connecting the habitat to the heat exchanger, and the fluid is flowed from the heat exchanger to the habitat along an output pathway connecting the habitat to the heat exchanger.

Additionally or alternatively, in this or other embodiments the flow of fluid is one of air, water or refrigerant.

Additionally or alternatively, in this or other embodiments one of a pump or a fan is operably connected to one or more of the input pathway or the output pathway.

Additionally or alternatively, in this or other embodiments the heat exchanger includes a heat exchanger pathway through which the flow of fluid is directed to exchanger thermal energy with the regolith material.

Additionally or alternatively, in this or other embodiments the heat exchanger pathway is multipass.

Additionally or alternatively, in this or other embodiments a plurality of fins extend from the heat exchanger pathway.

Additionally or alternatively, in this or other embodiments the heat exchanger is located at a depth of between 1 and 3 feet below a top surface of the regolith material.

Additionally or alternatively, in this or other embodiments the one or more heat generating systems includes an environmental control and life support system or a thermal control system.

### BRIEF DESCRIPTION OF THE DRAWINGS

The following descriptions should not be considered limiting in any way. With reference to the accompanying drawings, like elements are numbered alike:
FIG. 1 is a schematic view of an embodiment of an extraplanetary habitat having a heat exchanger;
FIG. 2 is a plan view of an embodiment of a heat exchanger;
FIG. 3 is a plan view of another embodiment of a heat exchanger;
FIG. 4 is another plan view of an embodiment of a heat exchanger;
FIG. 5 is yet another plan view of an embodiment of a heat exchanger; and
FIG. 6 is a schematic view of yet another embodiment of a heat exchanger; and
FIG. 7 is a schematic view of another embodiment of an extraplanetary habitat having a heat exchanger.

### DETAILED DESCRIPTION

A detailed description of one or more embodiments of the disclosed apparatus and method are presented herein by way of exemplification and not limitation with reference to the Figures. For convenience, the conversion factor from feet to meters is 1 foot equals 0,3048 meters.

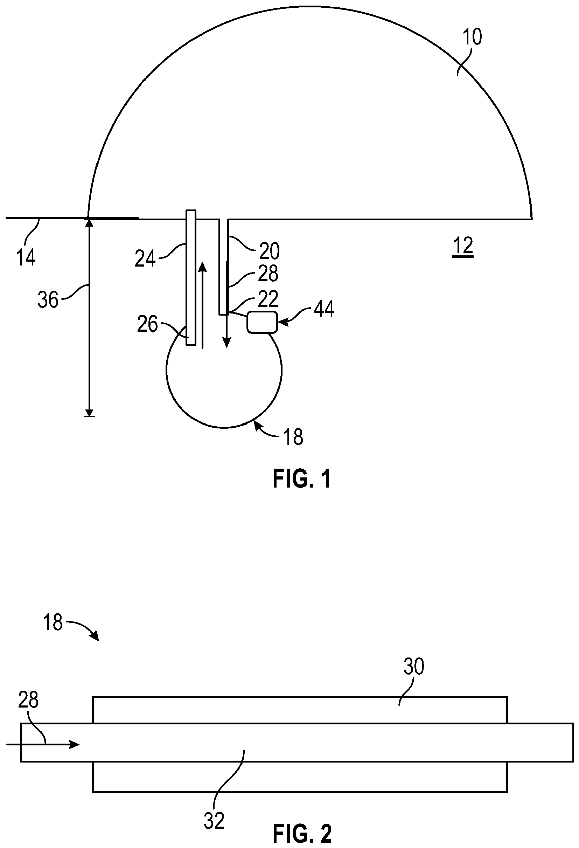

Referring now to FIG. 1, illustrated is a schematic view of an extraplanetary habitat 10. The habitat 10 is located over a site 12 comprising a layer of regolith material 14. The site 12 is, for example, an extraterrestrial location, such as a moon, an asteroid or another planet. The habitat 10 includes one or more devices that generate heat and which are desired to be cooled. For example, the habitat 10 may include an environmental control and life support system (ECLSS) and/or a thermal control system or other components such as electronics or the like which generate heat through operation.

A heat exchanger 18 is connected to the habitat 10 to dissipate thermal energy from the habitat 10. The heat exchanger 18 is buried in the regolith material 14 and utilizes the thermal conductivity of the regolith material 14 to a working fluid circulated through the heat exchanger 18 in thermal energy dissipation. The regolith material 14 is especially useful in extraterrestrial environments such as the moon, as a gaseous atmosphere cannot be utilized there as a heat dissipator. The habitat 10 is connected to the heat exchanger 18 via an input pathway 20 and connected to the heat exchanger 18 at a heat exchanger inlet 22 and an output pathway 24 connected to the heat exchanger 18 at a heat exchanger outlet 26. The input pathway 20 and the output pathway 24 may be, for example, pipes, hoses or other conduits for conveying the working fluid between the heat exchanger 18 and the habitat 10.

In operation, relatively warm working fluid 28, for example, air, water, refrigerant, or other fluids is circulated from the habitat 10 to the heat exchanger 18 via the input pathway 20 and through the heat exchanger 18. At the heat exchanger, 18, thermal energy from the working fluid 28 is transferred to the regolith material 14 via conduction of the regolith material 14, thus cooling the working fluid 28. The cooled working fluid 28 is then returned to the habitat 10 via the output pathway 24. In some embodiments, a pump 44, or alternatively a fan, located, for example, along the input pathway 20 or the output pathway 24 is utilized to urge the working fluid 28 flow through the heat exchanger 18.

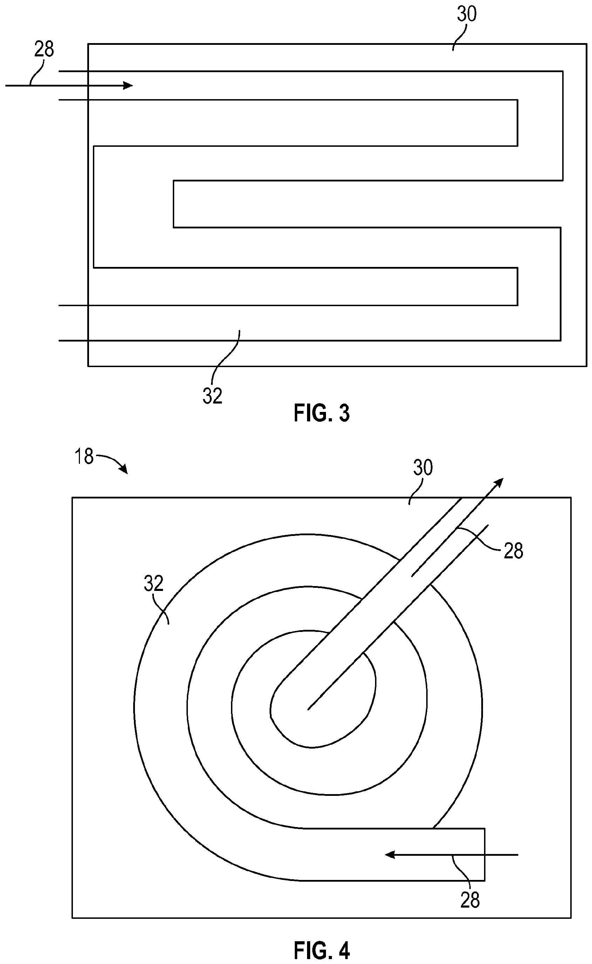

Referring now to FIG. 2, illustrated is an embodiment of a heat exchanger 18. In the embodiment illustrated, the heat exchanger 18 is a conduit 32 located in a trench 30 or hole formed in the regolith material 14, which, after installation of the heat exchanger 18, is refilled with regolith material 14. In the illustrated embodiment, the heat exchanger 18 is a single-pass heat exchanger 18. Alternatively, as illustrated in FIG. 3 the heat exchanger conduit 32 may have a multi-pass configuration. The heat exchanger conduit 32 is formed from a thermally conductive material such as copper or aluminum, which may need to be coated or alloyed to prevent galvanic corrosion, or plastic or composite materials. In another embodiment, shown in FIG. 4, the heat exchanger 18 has a spiral or coiled configuration. In some embodiments, the could configuration is formed by wrapping or winding of a flexible material, or in other embodiments by additive manufacturing or other suitable processes. Such materials may include, for example, a metal-impregnated polymer or the like.

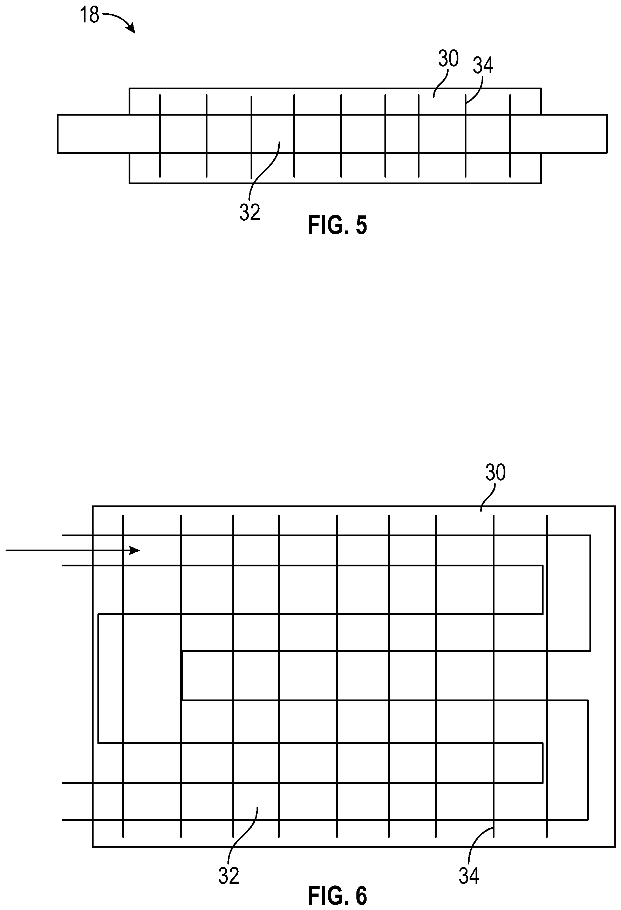

As shown in FIGs. 5 and 6, in some embodiments, the heat exchanger 18 includes one or more fins 34 or other features extending from the heat exchanger conduit 32 to aid in conducting thermal energy from the working fluid 28 into the regolith material 14. In some embodiments, the fins 34 and the heat exchanger conduit 32 are formed from the same thermally conductive material as the conduit 32, while in other embodiments the fins 34 and the heat exchanger conduit 32 are formed from different materials.

The trench 30 is formed in the regolith material 14 at a depth 36 (shown in FIG. 1) to maximize thermal conductivity from the heat exchanger 18, while also minimizing the necessary depth for installation. In some embodiments (e.g. on the moon), the depth 36 is in the range of 1 to 3 feet.

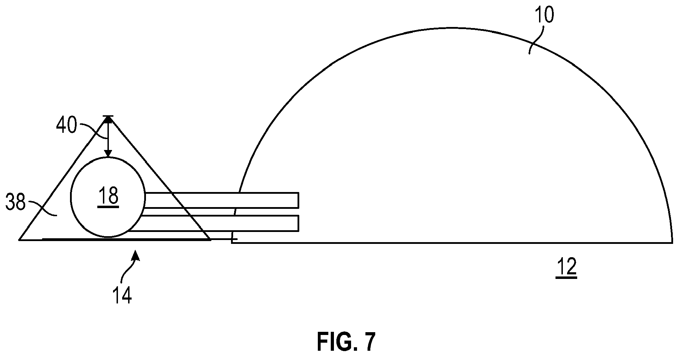

Alternatively, in other embodiments, such as shown in FIG. 7 a trench 30 is not utilized. The heat exchanger 18 is placed on the surface of the site 12, and a mound 38 of regolith material 14 is formed around and over the heat exchanger 18. In some embodiments, the regolith material 14 around and atop the heat exchanger 18 has a thickness 40 in the range of 1 to 3 feet. The thickness 40 needed or utilized is temperature dependent, and other thicknesses may be utilized to achieve the desired thermal energy transfer. The shape of the mound 38 is not limited by the exemplary shape shown in FIG. 6.

Use of the regolith material 14 as a medium into which thermal energy generated by the ELCSS and/or other components of the habitat 10 is dissipated is effective and cost efficient, without requiring the use of more complex systems to reject the thermal energy.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An extraplanetary habitat system, comprising:
a habitat (10) disposed on a site comprising a layer of regolith material; the habitat disposed atop the layer of regolith material;
one or more heat-generating systems disposed in the habitat (10);
a heat exchanger (18) disposed remotely from the habitat and operably connected to the one or more heat-generating systems, the heat exchanger (18) disposed beneath the layer of regolith material and configured to conduct the heat from the habitat (10) into the layer of regolith material.

2. The extraplanetary habitat system of claim 1, further comprising:
an input pathway connecting the habitat (10) to the heat exchanger (18), to direct a flow of fluid from the habitat (10) to the heat exchanger (18); and
an output pathway connecting the habitat (10) to the heat exchanger (18), the flow of fluid cooled by the heat exchanger (18) to the habitat (10).

3. The extraplanetary habitat system of claim 2, wherein the flow of fluid is one of air, water or refrigerant.

4. The extraplanetary habitat system of claim 2, further comprising one of a pump or a fan operably connected to one or more of the input pathway or the output pathway to urge the flow of fluid therethrough.

5. The extraplanetary habitat system of claim 2, wherein the heat exchanger (18) includes a heat exchanger pathway through which the flow of fluid is directed to exchanger thermal energy with the regolith material.

6. The extraplanetary habitat system of claim 5, wherein the heat exchanger pathway is multi-pass, and/or further comprising a plurality of fins extending from the heat exchanger pathway.

7. The extraplanetary habitat system of any preceding claim, wherein the heat exchanger (18) is disposed at a depth of between 1 and 3 feet below a top surface of the regolith material, or wherein the one or more heat generating systems includes an environmental control and life support system or a thermal control system.

8. A method of cooling one or more heat generating components of an extraplanetary habitat (10), comprising:
directing a flow of fluid from the habitat (10) disposed atop a layer of regolith material to a heat exchanger (18) located remotely from the habitat and beneath the layer of regolith material;
exchanging thermal energy between the flow of fluid and the regolith material, thereby cooling the volume of fluid; and
directing the flow of fluid from the heat exchanger (18) to the habitat (10), thus cooling the habitat (10).

9. The method of claim 8, comprising:
flowing the flow of fluid from the habitat (10) to the heat exchanger (18) along an input pathway connecting the habitat (10) to the heat exchanger (18); and
flowing the flow of fluid from the heat exchanger (18) to the habitat (10) along an output pathway connecting the habitat (10) to the heat exchanger (18).

10. The method of claim 9, wherein the flow of fluid is one of air, water or refrigerant.

11. The method of claim 9, further directing the fluid via one of a pump or a fan operably connected to one or more of the input pathway or the output pathway.

12. The method of claim 9, wherein the heat exchanger (18) includes a heat exchanger pathway through which the flow of fluid is directed to exchanger thermal energy with the regolith material.

13. The method of claim 12, wherein the heat exchanger pathway is multipass.

14. The method of claim 12, further comprising a plurality of fins extending from the heat exchanger pathway, or wherein the heat exchanger (18) is disposed at a depth of between 1 and 3 feet below a top surface of the regolith material.

15. The method of claim 8, wherein the one or more heat generating components includes an environmental control and life support system or a thermal control system.

## Patentansprüche

1. Extraplanetäres Habitatsystem, umfassend:
ein Habitat (10), das an einem Ort angeordnet ist, der eine Schicht aus Regolithmaterial umfasst; wobei das Habitat auf der Schicht aus Regolithmaterial angeordnet ist;
ein oder mehrere im Habitat (10) angeordnete wärmeerzeugende Systeme;
einen Wärmetauscher (18), der entfernt von dem Habitat angeordnet und betriebsmäßig mit dem einen oder den mehreren wärmeerzeugenden Systemen verbunden ist, wobei der Wärmetauscher (18) unter der Schicht aus Regolithmaterial angeordnet und dazu ausgelegt ist, die Wärme von dem Habitat (10) in die Schicht aus Regolithmaterial zu leiten.

2. Extraplanetäres Habitatsystem nach Anspruch 1, ferner umfassend:
einen Eingangsweg, der das Habitat (10) mit dem Wärmetauscher (18) verbindet, um einen Fluidstrom von dem Habitat (10) zu dem Wärmetauscher (18) zu führen; und
einen Ausgangsweg, der das Habitat (10) mit dem Wärmetauscher (18) verbindet, wobei der Fluidstrom, der durch den Wärmetauscher (18) gekühlt wird, zu dem Habitat (10) fließt.

3. Extraplanetäres Habitatsystem nach Anspruch 2, wobei der Fluidstrom eines von Luft, Wasser oder Kältemittel ist.

4. Extraplanetäres Habitatsystem nach Anspruch 2, ferner umfassend eine Pumpe oder ein Gebläse, die bzw. das mit einem oder mehreren der Eingangs- oder Ausgangswege betriebsmäßig verbunden ist, um den Fluidstrom dort durchzutreiben.

5. Extraplanetäres Habitatsystem nach Anspruch 2, wobei der Wärmetauscher (18) einen Wärmetauscherweg beinhaltet, durch den der Fluidstrom geführt wird, um thermische Energie mit dem Regolithmaterial auszutauschen.

6. Extraplanetäres Habitatsystem nach Anspruch 5, wobei der Wärmetauscherweg aus mehreren Durchgängen besteht und/oder ferner eine Vielzahl von Rippen umfasst, die sich von dem Wärmetauscherweg aus erstrecken.

7. Extraplanetäres Habitatsystem nach einem der vorhergehenden Ansprüche, wobei der Wärmetauscher (18) in einer Tiefe zwischen 1 und 3 Fuß unter der Oberfläche des Regolithmaterials angeordnet ist oder wobei das eine oder die mehreren wärmeerzeugenden Systeme ein Umweltsteuerungs- und Lebenserhaltungssystem oder ein thermisches Steuerungssystem umfassen.

8. Verfahren zum Kühlen einer oder mehrerer wärmeerzeugenden Komponenten eines extraplanetären Habitats (10), umfassend:
Führen eines Fluidstroms von dem Habitat (10), das auf einer Schicht aus Regolithmaterial angeordnet ist, zu einem Wärmetauscher (18), der sich entfernt von dem Habitat und unterhalb der Schicht aus Regolithmaterial befindet;
Austauschen von Wärmeenergie zwischen dem Fluidstrom und dem Regolithmaterial, wodurch das Fluidvolumen gekühlt wird; und
Führen des Fluidstroms von dem Wärmetauscher (18) zu dem Habitat (10), wodurch das Habitat (10) gekühlt wird.

9. Verfahren nach Anspruch 8, umfassend:
Strömenlassen des Fluidstroms von dem Habitat (10) zu dem Wärmetauscher (18) entlang eines Eingangsweges, der das Habitat (10) mit dem Wärmetauscher (18) verbindet; und
Strömenlassen des Fluidstroms von dem Wärmetauscher (18) zu dem Habitat (10) entlang eines Ausgangsweges, der das Habitat (10) mit dem Wärmetauscher (18) verbindet.

10. Verfahren nach Anspruch 9, wobei der Fluidstrom eines von Luft, Wasser oder Kältemittel ist.

11. Verfahren nach Anspruch 9, wobei das Fluid ferner über eine Pumpe oder ein Gebläse geführt wird, die bzw. das mit dem Eingangsweg oder dem Ausgangsweg betriebsmäßig verbunden ist.

12. Verfahren nach Anspruch 9, wobei der Wärmetauscher (18) einen Wärmetauscherweg beinhaltet, durch den der Fluidstrom geführt wird, um thermische Energie mit dem Regolithmaterial auszutauschen.

13. Verfahren nach Anspruch 12, wobei der Wärmetauscherweg ein Mehrwegweg ist.

14. Verfahren nach Anspruch 12, ferner umfassend eine Vielzahl von Rippen, die sich von dem Wärmetauscherweg aus erstrecken, oder wobei der Wärmetauscher (18) in einer Tiefe zwischen 1 und 3 Fuß unter der oberen Oberfläche des Regolithmaterials angeordnet ist.

15. Verfahren nach Anspruch 8, wobei die eine oder mehreren wärmeerzeugenden Komponenten ein Umweltsteuerungs- und Lebenserhaltungssystem oder ein Wärmekontrollsystem beinhalten.

## Revendications

1. Système d'habitat extraplanétaire, comprenant :
un habitat (10) disposé sur un site comprenant une couche de matériau régolithe ; l'habitat disposé au-dessus de la couche de matériau régolithe ;
un ou plusieurs systèmes de génération de chaleur disposés dans l'habitat (10) ;
un échangeur de chaleur (18) disposé à distance de l'habitat et connecté fonctionnellement aux un ou plusieurs systèmes de génération de chaleur, l'échangeur de chaleur (18) étant disposé sous la couche de matériau régolithe et configuré pour conduire la chaleur de l'habitat (10) vers la couche de matériau régolithe.

2. Système d'habitat extraplanétaire selon la revendication 1, comprenant en outre :
un chemin d'entrée reliant l'habitat (10) à l'échangeur de chaleur (18), pour diriger un flux de fluide de l'habitat (10) vers l'échangeur de chaleur (18) ; et
un chemin de sortie reliant l'habitat (10) à l'échangeur de chaleur (18), le flux de fluide refroidi par l'échangeur de chaleur (18) vers l'habitat (10).

3. Système d'habitat extraplanétaire selon la revendication 2, dans lequel le flux de fluide est celui de l'air, de l'eau ou un réfrigérant.

4. Système d'habitat extraplanétaire selon la revendication 2, comprenant en outre l'une d'une pompe ou d'une soufflante connectée fonctionnellement à un ou plusieurs chemins d'entrée ou chemins de sortie pour pousser le flux de fluide à travers celles-ci.

5. Système d'habitat extraplanétaire selon la revendication 2, dans lequel l'échangeur de chaleur (18) comporte un chemin d'échangeur de chaleur à travers lequel le flux de fluide est dirigé vers l'échangeur de l'énergie thermique avec le matériau régolithe.

6. Système d'habitat extraplanétaire selon la revendication 5, dans lequel le chemin d'échangeur de chaleur est à passages multiples et/ou comprend en outre une pluralité d'ailettes s'étendant à partir du chemin d'échangeur de chaleur.

7. Système d'habitat extraplanétaire selon une quelconque revendication précédente, dans lequel l'échangeur de chaleur (18) est disposé à une profondeur comprise entre 1 et 3 pieds au-dessous d'une surface supérieure du matériau régolithe, ou dans lequel les un ou plusieurs systèmes de génération de chaleur comportent un système de survie ou de contrôle environnemental ou un système de contrôle thermique.

8. Procédé de refroidissement d'un ou plusieurs composants de génération de chaleur d'un habitat extraplanétaire (10), comprenant :
le fait de diriger un flux de fluide depuis l'habitat (10) disposé au-dessus d'une couche de matériau régolithe vers un échangeur de chaleur (18) situé à distance de l'habitat et sous la couche de matériau régolithe ;
l'échange de l'énergie thermique entre le flux de fluide et le matériau régolithe, refroidissant ainsi le volume de fluide ; et
le fait de diriger un flux de fluide depuis l'échangeur de chaleur (18) vers l'habitat (10), refroidissant ainsi l'habitat (10).

9. Procédé selon la revendication 8, comprenant :
l'écoulement d'un flux de fluide de l'habitat (10) à l'échangeur de chaleur (18) le long d'un chemin d'entrée reliant l'habitat (10) à l'échangeur de chaleur (18) ; et
l'écoulement d'un flux de fluide de l'échangeur de chaleur (18) à l'habitat (10) le long d'un chemin de sortie reliant l'habitat (10) à l'échangeur de chaleur (18).

10. Procédé selon la revendication 9, dans lequel le flux de fluide est celui de l'air, de l'eau ou un réfrigérant.

11. Procédé selon la revendication 9, dirigeant en outre le fluide par le biais d'une pompe ou d'une soufflante connectée fonctionnellement à un ou plusieurs chemins d'entrée ou chemins de sortie.

12. Procédé selon la revendication 9, dans lequel l'échangeur de chaleur (18) comporte un chemin d'échangeur de chaleur à travers lequel le flux de fluide est dirigé vers l'échangeur de l'énergie thermique avec le matériau régolithe.

13. Procédé selon la revendication 12, dans lequel le chemin d'échangeur de chaleur est à passages multiples.

14. Procédé selon la revendication 12, comprenant en outre une pluralité d'ailettes s'étendant depuis le chemin de l'échangeur de chaleur, ou dans lequel l'échangeur de chaleur (18) est disposé à une profondeur comprise entre 1 et 3 pieds au-dessous d'une surface supérieure du matériau régolithe.

15. Procédé selon la revendication 8, dans lequel les un ou plusieurs composants de génération de chaleur comportent un système de contrôle environnemental et de survie ou un système de contrôle thermique.
